# EUROPÄISCHE PATENTSCHRIFT

(11) **EP 1 314 593 B1**
(45) Veröffentlichungstag und Bekanntmachung des Hinweises auf die Patenterteilung: **17.08.2005**
(21) Anmeldenummer: 02024328.3
(22) Anmeldetag: 02.11.2002
(51) Int. Cl.: B60H 1/24

(54) **Heiz- und/oder Klimaanlage mit Be- und Entlüftung**
Heating or air conditioning unit with ventilation and venting devices
Système de chauffage et/ou de climatisation avec dispositifs de ventilation et de désaération

(30) Priorität: 23.11.2001 DE 10157499
(43) Veröffentlichungstag der Anmeldung: 28.05.2003
(73) Patentinhaber: DaimlerChrysler AG, 70567 Stuttgart (DE)
(72) Erfinder: Currle, Joachim, Dr., 70327 Stuttgart (DE); Frühauf, Frank, Dr., 73773 Aichwald (DE); Kauf, Florian, Dr., 70195 Stuttgart (DE); Maué, Jürgen, 73235 Weilheim/Teck (DE); Wertenbach, Jürgen, 70734 Fellbach (DE)

(56) Entgegenhaltungen:
- DE-A- 19 807 002
- DE-C- 19 923 189
- JP-A- 10 006 744
- US-A- 5 673 747
- US-A1- 2001 029 162

## Beschreibung

Die Erfindung betrifft einen Fahrzeuginnenraum mit einer Heiz- und/oder Klimaanlage nach dem Oberbegriff des Anspruchs 1.

Um für die Insassen eines Fahrzeuges ein angenehmes Klima zu erzielen, ist man bestrebt im Fahrzeuginnenraum eine Temperaturschichtung zu schaffen. Dabei geht man von dem Prinzip "warme Füße, kühler Kopf" aus, d. h. man möchte einen warmen Fußraum und einen kühleren Kopf- bzw. Oberkörper erreichen.

Klimaanlagen weisen daher oftmals getrennte Luftkanäle für den Fußbereich und den Kopfbereich auf, wobei die Luftkanäle des Fußbereichs mit wärmerer Luft beaufschlagt werden als die des Kopfbereiches.

Um den Energieeinsatz, der für die Konditionierung der Luft erforderlich ist zu verkleinern, beschickt man den Fahrzeuginnenraum nicht nur mit reiner Frischluft, sondern verwendet ein Teil der schon vorkonditionierten Luft aus dem Fahrzeuginnenraum. Da diese Luft im Innenraum z. B. beim Heizbetrieb im Winter eine höhere Temperatur aufweist als die Außenluft, wird so der zum Heizen notwendige Energieeinsatz reduziert. Jedoch ist die Luft im Innenraum in der Regel sehr feucht und kann daher nur beschränkt wieder verwendet werden, da ansonsten die Scheiben von innen beschlagen könnten.

Aus der DE 198 01 979 A1 ist eine Fahrzeug-Klimaanlage bekannt, die Außenluftansaugöffnungen und Innenluftansaugöffnungen aufweist. Das Klimagehäuse weist eine Trennplatte auf, die das Klimagehäuse in zwei Luftdurchlässe auftrennt, so dass die Außenluft durch den einen Teil des Klimagehäuses geführt wird und die Innenluft durch den anderen Teil. Um das Beschlagen der Scheiben zu verhindern, wird anschließend die Außenluft in Richtung auf die Windschutzscheibe geblasen und die Innenluft in Richtung auf den Fußbereich. Die eingeblasene Luft durchmischt sich jedoch im Innenraum recht schnell, so dass um eine Beschlagsneigung zu vermeiden, mit einem hohen Außenluftanteil belüftet werden muss. Somit ist der gewonnene energetische Vorteil relativ gering, vor allem im Hinblick auf die doch sehr aufwendige und damit auch recht teure Konstruktion. Zudem muss die Innenluft erst von dem Fahrzeuginnenraum zu dem Klimagehäuse hin, durch dieses hindurch und anschließend wieder in dem Fahrzeuginnenraum gefördert werden, was sehr hohe Strömungsverluste zur Folge hat, die wiederum über ein leistungsfähiges Gebläse kompensiert werden müsse. US 2001/0029162 zeigt einen Fahrzeuginnenraum gemäß dem Oberbegriff des Anspruchs 1.

Der Erfindung liegt die Aufgabe zugrunde, einen Fahrzeuginnenraum mit einer Heiz- und/oder Klimaanlage zu schaffen, die konstruktiv einfach aufgebaut ist und mit möglichst wenig Energieeinsatz eine gute Beheizung und/oder Kühlung des Fahrzeuginnenraumes ermöglicht. Vorzugsweise soll die Heiz-und/oder Klimaanlage so ausgebildet sein, dass sie bei einem möglichst geringen Außenluftanteil ein Beschlagen der Scheiben von innen verhindert.

Diese Aufgabe wird erfindungsgemäß durch einen Fahrzeuginnenraum mit einer Heiz- und/oder Klimaanlage nach den Merkmalen des Anspruchs 1 gelöst.

Es sind im Fahrzeuginnenraum mehrere Lufteinlassöffnungen und mehrere Luftauslassöffnungen vorgesehen. Dabei bezieht sich die Richtung des Lufteinlasses auf den Fahrzeuginnenraum, so dass die Lufteinlassöffnung den Fahrzeuginnenraum belüftet und die Luftauslassöffnung den Fahrzeuginnenraum entlüftet. Die Lufteinlassöffnungen und die Luftauslassöffnungen sind so angeordnet, dass eine oder mehrere Lufteinlassöffnung bzw.

Lufteinlassöffnungen mit einer Luftauslassöffnung oder mehreren Luftauslassöffnungen zusammenwirken, so dass sich im Fahrzeuginnenraum vorherbestimmte Luftströmungen ausbilden. Eine Lufteinlassöffnung oder mehrere Lufteinlassöffnungen sind einer Luftauslassöffnung oder mehreren Luftauslassöffnungen zugeordnet. Insbesondere so zugeordnet, dass genau die durch eine Lufteinlassöffnung oder mehrere Lufteinlassöffnungen in den Fahrzeuginnenraum eingebrachte Luft durch die zugeordnete Luftauslassöffnung oder die zugeordneten Luftauslassöffnungen wieder abgeführt wird. So ist es möglich, unterschiedlich konditionierte Luft, z. B. unterschiedlich temperierte Luft oder unterschiedlich feuchte Luft zu gleicher Zeit nebeneinander in den Fahrzeuginnenraum einzubringen und wieder abzuführen und dabei eine unerwünschte Vermischung der unterschiedlich konditionierten Luft weitgehend zu vermeiden

Die Lufteinlass- bzw. Luftauslassöffnungen sind vorzugsweise so ausgebildet und/oder angeordnet, dass die durch eine Lufteinlassöffnung eingebrachte Luft entlang eines geschlossenen Strömungsverlaufes zu der zugeordneten Luftauslassöffnung bzw. den zugeordneten Luftauslassöffnungen strömt. Die Ausbildung der geschlossenen Strömungsverläufe im Fahrzeuginnenraum ist wesentlich, um eine Trennung von unterschiedlich konditionierter Luft auch im Fahrzeuginneren zu erhalten.

Es ist vorgesehen, das die zentrale, d. h. an zentraler Stelle im Fahrzeug, wie z. B. im Motorraum oder im Cockpitbereich angeordnete Luftkonditionier- und/oder Luftfördervorrichtung Außenluft fördert und entsprechend des gewünschten Innenraumklimas voreinstellbar konditioniert. Das bedeutet z.B., dass im Winter kalte Außenluft stark aufgeheizt werden muss oder im Sommer heiße Außenluft stark gekühlt werden muss, wofür jeweils ein entsprechend hoher Energieaufwand vonnöten ist. Die zentrale Luftkonditionier- und/oder Luftfördervorrichtung kann ein Gebläse und/oder einen Wärmetauscher und/oder einen Verdampfer zum Aufbereiten und/oder Fördern der Luft umfassen.

Um nun mit geringem Energieaufwand ein angenehmes Innenraumklima im Fahrzeug zu schaffen, wird daher vorteilhafterweise schon vorkonditionierte Innenraumluft mit zum klimatisieren verwendet, was als Umluftbetrieb bezeichnet wird. Diese Umluft hat jedoch den Nachteil, dass sie in der Regel feucht ist. Daher kann diese Innenraumluft nur im Bereich des Fußraumes verwendet werden, da ansonsten eine Beeinträchtigung des Komforts der Insassen eintritt oder sogar in Folge der feuchten Umluft, die Scheiben von innen beschlagen könnten.

Ein Gedanke der vorliegenden Erfindung sieht daher vor, die Strömungsverläufe nicht nur bei der Konditionierung und/oder Förderung der Luft, sondern auch im Innenraum des Fahrzeugs zu trennen. Somit wird die Beschlagsneigung verringert und der notwendige Energieaufwand, vorzugsweise zum Heizen, reduziert. Insbesondere wird der Anteil an zusätzlich mit hohem Energieeinsatz zu konditionierender Außenluft verringert, indem eine Durchmischung der Luft im Innenraum verringert wird.

Um eine besonders gute Trennung der Strömungsverläufe zu erhalten, ist vorzugsweise vorgesehen, in dem Fahrzeuginnenraum vorhandene Flächen als Leitflächen für die Strömung zu nutzen. So kann z.B. eine Strömung entlang der Scheiben und des Dachhimmels geführt werden und/oder eine Strömung in einem Fußraum entlang des Bodens und einer Sitzfläche.

Eine Ausführung der Erfindung sieht vor, dass die Lufteinlassöffnungen und die Luftauslassöffnungen eine rechteckige Lufteinlassfläche bzw. Luftauslassfläche mit einer schmalen Quer- und langen Längserstreckung aufweisen. Dadurch wird die Luft in erster Näherung linienförmig in das Fahrzeuginnere abgegeben und auch wieder abgeführt, so dass näherungsweise eine flächige Strömung entsteht, die z. B. entlang der Scheiben und des Daches geführt wird. Die flächige Strömung kann sich auch durch entsprechende Luftförderung und/oder Anordnung der Lufteinlass- bzw. Luftauslassflächen zu einem raumförmigen Strömungsgebilde, z. B. einer Walze schließen um insbesondere den Fußraum gut zu durchlüften.

Eine vorteilhafte Ausführung der Erfindung sieht vor, einzelne Lufteinlassöffnungen als Außenlufteinlassöffnungen und die zugehörigen Luftauslassöffnungen als Außenluftauslassöffnungen auszubilden. Dementsprechend ist auch vorgesehen einzelne Lufteinlassöffnungen als Umlufteinlassöffnungen und die zugehörigen Luftauslassöffnungen als Umluftauslassöffnungen auszubilden. Es können auch zwischen Außenluft und Umluft umschaltbare Lufteinlass- bzw. Luftauslassöffnungen vorgesehen sein.

Insbesondere kann die Heiz- und/oder Klimaanlage mehrere Betriebsarten aufweisen, so kann z. B. ein reiner Umluftbetrieb vorgesehen sein, bei dem mehr Umluftauslassöffnungen benötigt werden oder ein reiner Außenluftbetrieb, bei dem mehr Außenluftauslassöffnungen benötigt werden, wobei einzelne Lufteinlass- bzw. Luftauslassöffnungen entsprechend umschaltbar sind. Auch ein Mischbetrieb mit variablen, vorzugsweise vorwählbaren Anteilen von Außenluft zu Umluft ist vorgesehen.

Vorteilhafterweise können die Außenluft führenden Öffnungen im Kopf bzw. Brust-Bereich des Fahrzeuginnenraumes angeordnet werden und die Umluft führenden Öffnungen im Fußraum z.B. im Fahrerfußraum und/oder Beifahrerfußraum und/oder Fondfußraum. So wird im Fahrzeuginnenraum eine Schichtung der Luft erzielt, wobei frische und/oder trockene und/oder konditionierte Außenluft oben im Kopf-Brustbereich des Fahrzeuginnenraumes und Umluft in dem Fußraum oder den Fußräumen angeordnet ist.

Eine vorteilhafte Ausführung der Erfindung sieht vor, dass die Umluft im Fußraum walzenförmig oder zylinderförmig umgewälzt wird. Durch die walzen- oder zylinderförmige Umwälzung der Umluft entsteht im Fußraum ein in sich abgeschlossenes und stabiles Strömungsgebilde, so dass eine unerwünschte Durchmischung der Umluft mit Außenluft stark unterdrückt wird.

In einer Ausführung ist vorgesehen, zur walzenförmigen Umwälzung eine Einheit zur Konditionierung und/oder Förderung von Umluft, die eine Umlufteinlassöffnung und eine zugehörige Umluftauslassöffnung umfasst, im Fußraum anzuordnen. Vorzugsweise wird in jedem Fußraum eine solche Einheit angeordnet, so dass pro Fahrzeuginsasse eine Einheit zur Konditionierung und/oder Förderung von Umluft vorhanden ist. Die Umluftauslassöffnung der Einheit kann über einen lokalen, d. h. einen lokal im Fahrzeuginnenraum angeordneten Luftrückführkanal, der separat und räumlich getrennt von der zentralen Luftförder- und/oder Luftkonditioniervorrichtung ausgebildet ist, mit der Umlufteinlassöffnung verbunden sein. Die Umluftauslassöffnung und die Umlufteinlassöffnung können eng benachbart angeordnet sein, so dass der Luftrückführkanal relativ kurz sein kann und demzufolge auch nur einen geringen Strömungswiderstand aufweist. In dem Luftrückführkanal können ferner Komponenten zur Konditionierung der Umluft wie z.B. Wärmetauscher und/oder elektrische Heizung und/oder Peltierelement und/oder Luftfilter und/oder Vorrichtungen zur Lufttrocknung und/oder Luftbefeuchtung angeordnet sein. Die Umluft verbleibt somit lokal in dem Bereich des Fußraumes und wird mit sehr geringen Strömungswiderständen an lokaler Stelle konditioniert. Somit werden lange und konstruktiv aufwendige Luftkanäle vermieden, die zudem noch sehr verlustbehaftet sind.

Zur Förderung der Luft ist weiter vorgesehen, dass in dem lokalen Luftrückführkanal der Einheit, ein lokales Luftförderaggregat angeordnet ist. Vorteilhafterweise ist dieses als Disk-Fan oder auch Scheibenlüfter ausgebildet. Der Disk-Fan oder Scheibenlüfter weist ein rotierendes Paket aus mehreren parallelen Scheiben geringer Dicke auf, wobei zwei Scheiben jeweils einen zwischenliegenden Luftspalt begrenzen. Der Disk-Fan ist so ausgebildet, dass seine Ansaug- und seine Abblasrichtung in einer Ebene liegen. Durch diesen charakteristischen Aufbau fördert der Disk-Fan insbesondere die Ausbildung stabiler und in sich geschlossener Strömungswalzen. Ebenfalls von Vorteil ist, dass der Disk-Fan oder Scheibenlüfter bauartbedingt nur einen sehr geringen Geräuschpegel aufweist, so dass aufwendige und mit Strömungsverlusten behaftete Schalldämpfungsmaßnahmen reduziert bzw. ganz entfallen können.

Es ist auch vorgesehen, den Lüfter als Axial-Lüfter, insbesondere als Walzenlüfter auszubilden.

In einer Ausführung der Erfindung ist vorgesehen, dass die lokal im Fußraum angeordneten Einheiten zur Konditionierung und/oder Förderung von Umluft unabhängig steuerbar und/oder regelbar sind, so dass ein Passagier in seinem Bereich ein individuelles Klima einstellen kann. Ferner ist auch vorgesehen, dass die Einheiten abhängig von der zentralen Luftförder- und Luftkonditioniervorrichtung steuerbar sind, so dass zentrale Heiz- und/oder Klimaeinstellungen möglich sind.

Es sind auch Ausführungen möglich, die neben einem Umluftbetrieb, einen reinen Außenluftbetrieb zum schnellen Ändern des Innenraumklimas wie z.B. Trocknen und/oder Kühlen und/oder Heizen oder einen Mischbetrieb aus Außen und/oder Umluft vorsehen. Insbesondere sind einzelne Lufteinlassöffnungen und/oder Luftauslassöffnungen schaltbar ausgebildet, so dass sie von Umlufteinlassbetrieb auf Außenlufteinlassbetrieb oder von Umluftauslassbetrieb auf Außenluftauslassbetrieb schaltbar sind.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1:**: Die Heiz- und/oder Klimaanlage in einem Fahrzeug in Seitenansicht mit schematischer Darstellung von Luftströmungen;
- **Figur 2:**: Eine perspektivische Darstellung des Fahrzeuginnenraums mit beispielhafter Anordnung von Be- und Entlüftungsflächen;

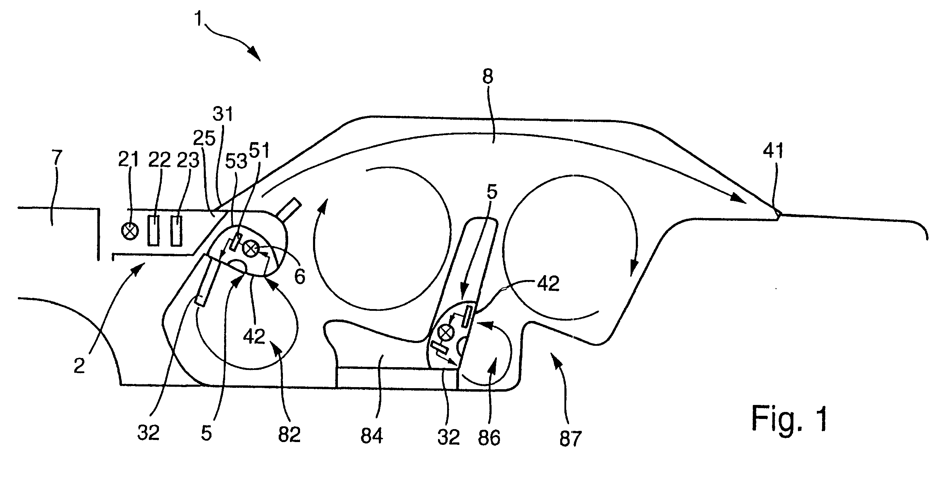

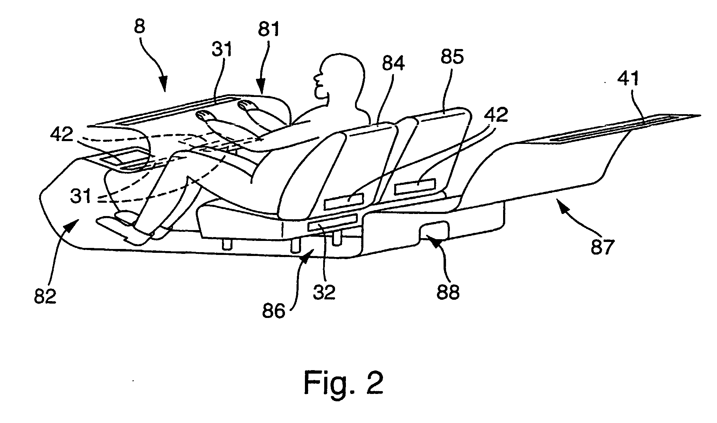

Die **Figur 1** zeigt eine Anordnung der Heiz- und/oder Klimaanlage 1 in einem Personenkraftwagen in schematischer Seitenansicht. Die Heiz- und/oder Klimaanlage 1 umfasst ein im Motorraum 7 zentral angeordnetes Klimagehäuse 2, in dem eine zentrale Luftkonditionier- und/oder Luftfördervorrichtung angeordnet ist, sowie mehrere im Fahrzeuginnenraum 8 verteilt angeordnete lokale Einheiten 5 zur Luftkonditionierung und/oder Luftförderung. Der Fahrzeuginnenraum 8 ist auch in **Figur 2** in räumlicher Perspektive dargestellt.

Im vorderen Bereich des Fahrzeuginnenraumes 8 ist ein Cockpit 81 unten an eine Windschutzscheibe anschließend angeordnet. Nach unten setzt sich die Begrenzungsfläche des Cockpits 81 fort und geht in die Begrenzung des Fahrer- bzw. Beifahrerfußraumes 82, 83 über. Der Fahrzeuginnenraum 8 weist einen weitgehend ebenen Innenraumboden auf, der in Fahrzeuglängsrichtung durch einen Mitteltunnel 87 geteilt ist. Auf dem Innenraumboden ist ein Fahrersitz 84 sowie ein Beifahrersitz 85 befestigt, die jeweils in Fahrzeuglängsrichtung verschiebbar angeordnet sind. Die Rückseite des Fahrzeuginnenraumes 8 ist durch eine Fondsitzbank 87 abgeschlossen. An dem oberen Ende der Fondsitzbank ist eine Hutablage angebracht, die den verbleibenden Raum zur Heckscheibe abdeckt und als Stauraum nutzbar ist.

Der Fahrzeuginnenraum 8 ist relativ zerklüftet und weist mehrere, durch Begrenzungsflächen abgegrenzte Räume auf. Die Vordersitze, also der Fahrersitz und der Beifahrersitz teilen den Fahrzeuginnenraum in einen vorderen Abschnitt vor dem Fahrer- 84 bzw. Beifahrersitz 85 und einen hinteren Teil zwischen Fondsitzbank 87 und Fahrer- 84 bzw. Beifahrersitz 85 auf. Zusätzlich ist der Fahrzeuginnenraum 8 im unteren Bereich durch den Mitteltunnel 87 in Längsrichtung geteilt, so dass der Fahrerfußraum 82 von dem Beifahrerfußraum 83 abgeteilt ist. In dem oberen Bereich des Fahrzeuginnenraumes ist im Kopf- bzw. Brustbereich der Passagiere ein freier Innenraumabschnitt, der zwischen oberem Ende der Sitze 84, 85 bzw. deren Kopfstützen und Dachhimmel angeordnet ist und sich von dem vorne angeordneten Cockpit 87 bis nach hinten zu dem oberen Ende der Fondsitzbank 87 erstreckt.

Die erfindungsgemäße Heiz- und/oder Klimaanlage 1 weist für jeden der zu belüfteten Abschnitte des Fahrzeuginnenraumes 8 entsprechend ausgebildete Lufteinlassöffnungen 31, 32 und diesen zugeordnete Luftauslassöffnungen 41, 42 auf.

In dem zentral im Motorraum angeordneten Klimagehäuse ist die zentrale Luftförder- und/oder Luftkonditioniervorrichtung 2 angeordnet, d. h. ein zentrales Luftförderaggregat 21, ein Wärmetauscher 23 und ein Verdampfer 22. Das Luftförderaggregat 21 fördert Außenluft durch den Wärmetauscher 23 und den Verdampfer 22 sowie durch Luftkanäle hindurch in den Fahrzeuginnenraum 8. Die Außenluft strömt dabei von außen in das Klimagehäuse 2 hinein und wird über einen Wasserkasten, der eventuell mitgeführtes Wasser abtrennt, geführt. In dem Klimagehäuse 2 sind zudem stellbare Klappen und Umgehungskanäle angeordnet, um die Außenluft je nach gewünschter Temperatur und/oder Feuchtigkeit durch den Wärmetauscher 22 und/oder den Verdampfer 23 hindurch, oder nur zum Teil durch diese hindurch oder um diese herum zu leiten. So kann die Außenluft entsprechend des gewünschten Innenraumklimas wunschgemäß konditioniert werden.

Über eine im Bereich des Cockpits an der Windschutzscheibe angeordnete Außenlufteinlassöffnung 31 tritt die konditionierte Außenluft in den Fahrzeuginnenraum 8 ein. Diese Außenlufteinlassöffnung 31 erstreckt sich am unteren Ende der Windschutzscheibe über einen Großteil der Breite des Cockpits 81 bzw. des Fahrzeugs. Der Außenlufteinlassöffnung 31 ist eine im Bereich der Heckscheibe angeordnete Außenluftauslassöffnung 41 zugeordnet. Diese ist im Bereich der Hutablage im unteren Bereich der Heckscheibe angeordnet und erstreckt sich ebenfalls über einen Großteil der Fahrzeugbreite.

Die Außenlufteinlassöffnung 31 ist so angeordnet, dass eingeblasene Außenluft, wie in Figur 1 mit einem Pfeil dargestellt, entlang der vorhandenen Begrenzungsflächen des Innenraumes wie Windschutzscheibe, Dachhimmel und Heckscheibe hin zu der Außenluftauslassöffnung 32 geführt wird. Somit werden die Scheiben und der Kopfbereich der Passagiere von dieser konditionierten Außenluft beströmt.

Im Fahrzeuginnenraum 8 sind in den abgegrenzten Teilräumen, wie z.B. Fahrerfußraum 82 und/oder Beifahrerfußraum 83 und/oder Fondfußraum 86 lokale Einheiten 5 zur lokalen Luftkonditionierung und/oder Luftförderung so angeordnet, dass eine gezielte Belüftung dieser lokal abgegrenzten Räume über die zu der Einheit gehörenden Lufteinlass- bzw. Luftauslassöffnung ermöglicht wird.

An der Unterseite des Cockpits 81 ist nach unten zu dem Bereich des Fahrerfußraumes hinweisend eine Umluftauslassöffnung 42 angeordnet. Die dieser zugeordnete Umlufteinlassöffnung 32 ist ebenfalls am unteren Bereich des Cockpits angeordnet und liegt in Fahrtrichtung gesehen vor der Umluftauslassöffnung 42. In Abwandlung zu der illustrierten Ausführung kann die Umlufteinlassöffnung 32 in Fahrtrichtung gesehen auch hinter der Umluftauslassöffnung liegen. Mit einem Luftrückführkanal 53 ist die Umluftauslassöffnung 42 mit der Umlufteinlassöffnung 32 verbunden. In dem Luftrückführkanal 53 ist ein lokales Luftförderaggregat 6 sowie ein lokaler Wärmetauscher 51 angeordnet.

Die Umluft wird von der Umlufteinlassöffnung 32 entlang der Begrenzungsfläche an der Vorderwand des Fahrerfußraumes 82 geleitet, an dem Innenraumboden entgegen der Fahrtrichtung umgelenkt und strömt dann an der Vorderfläche des Fahrersitzkissens entlang zu der Umluftauslassöffnung 42 hin. Dort wird die Umluft von dem Luftförderaggregat 6 wieder angesaugt und durch den Luftrückführkanal 53 und die Umlufteinlassöffnung 32 wieder in den Fahrerfußraum eingeblasen. Es bildet sich also im Fahrerfußraum ein Umluft-Kreislauf mit walzen- oder zylinderförmigem Strömungsverlauf, der wiederum in Figur 1 durch einen Pfeil angedeutet ist.

Die Umlufteinlassöffnung 32 und die Umluftauslassöffnung 42 weisen jeweils rechteckige Grundfläche mit schmaler Quer- und langer Längserstreckung auf. Die Längserstreckung verläuft quer zu der Fahrzeuglängsrichtung und ist an die Breite der Strömungswalze angepasst.

In dem Beifahrerfußraum ist auch eine lokale Einheit 5 zur lokalen Luftkonditionierung und/oder Luftförderung angeordnet, die analog der vorstehend beschriebenen lokalen Einheit 5 aufgebaut und angeordnet ist.

Es ist vorgesehen, dass der lokale Lüfter 6 und/oder der lokale Wärmetauscher 51 individuell einstellbar ist. So kann der Fahrer die lokale Temperatur und/oder die Stärke der lokalen Umwälzung der Umluft in dem Fußraum individuell einstellen. Ferner ist vorgesehen, den Lüfter 6 und/oder den Wärmetauscher 51 über eine Steuerungsvorrichtung gemeinsam mit dem zentralen Luftförderaggregat 21 und/oder dem zentralen Wärmetauscher 22 und/oder dem zentralen Verdampfer 23 und oder weiteren lokal angeordneten Einheiten zu steuern, um über ein voreingestelltes Klimaprogramm z B. ein schnelles Aufheizen oder Abkühlen des Fahrzeuginnenraumes 8 zu steuern.

In dem Fahrersitz 84 und dem Beifahrersitz 85 ist ebenfalls eine lokale Einheit 5 zur lokalen Luftkonditionierung und/oder Luftförderung angeordnet. Hier ist jeweils die Umlufteinlassöffnung 32 an der hinteren unteren Kante des Sitzkissens angeordnet, so dass die Umluft in Richtung des Fondfußraumes 86 zu dem Boden des Innenraumes hin gerichtet ausströmt. Die Luft strömt an der Begrenzungsfläche des Innenraumbodens entlang und wird an der Vorderseite der Fondsitzbank 87 nach oben abgelenkt. An der Rückenlehne des Fahrer- 84 und/oder Beifahrersitzes 85 ist in Höhe der Sitzfläche der Fondsitzbank 87 die zugeordnete Umluftauslassöffnung 42 angeordnet, die die an der Fondsitzbank 87 umgelenkte Luftströmung ansaugt. Die Umlufteinlassöffnung 32 und die Umluftauslassöffnung 42 der lokalen, im Fahrer- 84 bzw. Beifahrersitz 85 angeordneten Einheit 5 sind so angeordnet und/oder ausgebildet, dass sich im Fußraum hinter dem Fahrer-84 und/oder Beifahrersitz 85 eine lokal abgegrenzte und/oder geschlossene Luftströmung ausbildet. Es ist ferner vorgesehen, dass die in den Sitzen 84, 85 angeordneten Einheiten 5 analog den vorstehend beschriebenen Einheiten 5 aufgebaut sind.

In Abwandlung zu der dargestellten Ausführung ist es auch vorgesehen, dass die Strömungsrichtung umgedreht wird, indem die Umlufteinlassöffnung mit den Umluftauslassöffnungen vertauscht werden, so dass eine zu der dargestellten Luftwalze entgegengesetzt drehende Luftwalze entsteht.

Die Sitze 84, 85 mit den integrierten lokalen Einheiten 5 sind auch vorteilhafterweise bei Omnibussen oder Personenzügen einsetzbar, insbesondere zum individuell einstellbaren Klimatisieren einzelner, lokal abgegrenzter Bereiche z.B. eines Sitzplatzes.

Die lokalen Einheiten 5 wälzen die Umluft entlang geschlossener, walzenförmiger Strömungsverläufe um. Durch die Ausbildung von stabilen Strömungswalzen wird sichergestellt, dass zum größten Teil die Luft, die aus einer Lufteinlassöffnung 31, 41 in den Fahrzeuginnenraum 8 eingebracht wird zum größten Teil durch die zugehörige Luftauslassöffnung 32, 42 abgeführt wird.

Wie in Figur 1 dargestellt, sind die zylinder- oder walzenförmigen Umluftströmungen im Bereich der Fußräume 82, 83, 86 angeordnet. Die konditionierte Außenluft wird entlang des Daches geführt. Diese, durch eine aktive Belüftung verursachten Strömungen können weitere korrespondierende Luftströmungen bewirken, die ebenfalls Walzenform aufweisen und vor der Sitzfläche bzw. Lehnenfläche des Fahrersitzes 84 oder Beifahrersitzes 85 angeordnet sind. Es bilden sich an den Berührungsflächen der einzelnen Strömungen Kontaktflächen aus, z. B. im Dachbereich oder Fußraumbereich. An diesen Kontaktstellen ist jeweils eine geringe Durchmischung der verschiedenen Luftströmungen möglich.

In dem Fahrzeuginnenraum 8 wird durch die Anordnung der Lufteinlassöffnungen 31, 32 und Luftauslassöffnungen 41, 42 eine überwiegend geschichtete Luftströmung gebildet. Im oberen Bereich des Fahrzeuginnenraumes wird konditionierte Außenluft, bzw. Frischluft geführt. Im unteren Bereich des Fahrzeuginnenraumes wird überwiegend Umluft geführt.

## Patentansprüche

1. Fahrzeuginnenraum mit einer Heiz- und/oder Klimaanlage mit einer zentralen Luftkonditionier- und/oder Luftfördervorrichtung zum Temperieren und/oder Kühlen und/oder Trocknen und/oder Befeuchten und/oder Reinigen und/oder Fördern von Luft und mehreren in dem Fahrzeuginnenraum verteilt angeordneten Lufteinlass- und Luftauslassöffnungen, wobei unterschiedlich konditionierte Luft zu gleicher Zeit nebeneinander in den Fahrzeuginnenraum bringbar ist, wobei
dass eine Vermischung der unterschiedlich konditionierten Luft vermieden wird, indem die Lufteinlassöffnungen (31, 32) und die Luftauslassöffnungen (41, 42) einander zugeordnet sind, so dass die durch eine Lufteinlassöffnung (31) in den Fahrzeuginnenraum (8) eingebrachte Luft zum größten Teil durch die zugeordnete Luftauslassöffnung (41) abgeführt wird, **dadurch gekennzeichnet**
**dass** eine Lufteinlassöffnung oder mehrere Lufteinlassöffnungen als Außenlufteinlassöffnung (31) bzw. Außenlufteinlassöffnungen ausgebildet sind, indem sie nur Außenluft in den Fahrzeuginnenraum (8) zuführt bzw. zuführen und die zugeordnete Luftauslassöffnung bzw. die zugeordneten Luftauslassöffnungen als Außenluftauslassöffnung (41) bzw. Außenluftauslassöffnungen ausgebildet ist, bzw. sind, indem sie zum größten Teil nur Außenluft aus dem Fahrzeuginnenraum (8) abführt bzw. abführen, und
**dass** eine Lufteinlassöffnung oder mehrere Lufteinlassöffnungen als Umlufteinlassöffnung (32) bzw. Umlufteinlassöffnungen ausgebildet sind, indem sie nur Umluft in den Fahrzeuginnenraum (8) zuführt bzw. zuführen und die zugeordnete Luftauslassöffnung bzw. die zugeordneten Luftauslassöffnungen als Umluftauslassöffnung (42) bzw. Umluftauslassöffnungen ausgebildet ist, bzw. sind indem sie zum größten Teil nur Umluft aus dem Fahrzeuginnenraum (8) abführt bzw. abführen.

2. Fahrzeuginnenraum mit einer Heiz- und/oder Klimaanlage nach Anspruch 1,
**dadurch gekennzeichnet,**
**dass** eine Lufteinlassöffnung oder mehrere Lufteinlassöffnungen umschaltbar ausgebildet ist bzw. sind, so dass sie zwischen Außenlufteinlassöffnung (31) und Umlufteinlassöffnung (32) umschaltbar ist bzw. sind.

3. Fahrzeuginnenraum mit einer Heiz- und/oder Klimaanlage nach Anspruch 1 oder 2,
**dadurch gekennzeichnet,**
**dass** eine Luftauslassöffnung oder mehrere Luftauslassöffnungen umschaltbar ausgebildet ist bzw. sind, so dass sie zwischen Außenluftauslassöffnung (41) und Umluftauslassöffnung (42) umschaltbar ist bzw. sind.

4. Fahrzeuginnenraum mit einer Heiz- und/oder Klimaanlage nach einem der Ansprüche 1 bis 3,
**dadurch gekennzeichnet,**
**dass** die einander zugeordneten Lufteinlassöffnungen (32) und Luftauslassöffnungen (42) so ausgebildet und/oder steuerbar sind, dass die durch eine Lufteinlassöffnung eingebrachte Luft im Fahrzeuginnenraum (8) einen geschlossenen Strömungsverlauf ausbildet, der von einer Lufteinlassöffnung zu der dieser zugeordneten Luftauslassöffnung weist.

5. Fahrzeuginnenraum mit einer Heiz- und/oder Klimaanlage einem der Ansprüche 1 bis 4,
**dadurch gekennzeichnet,**
**dass** die einander zugeordneten Lufteinlassöffnungen (31, 32) und Luftauslassöffnungen (41, 42) im Fahrzeuginnenraum (8) so angeordnet sind, dass in dem Fahrzeuginnenraum vorhandene Flächen, vorzugsweise Scheiben und/oder Karosserieflächen und/oder Sitzflächen, als Leitflächen für den Strömungsverlauf zwischen den Lufteinlassöffnungen (31, 32) und den zugeordneten Luftauslassöffnungen (41, 42) nutzbar sind.

6. Fahrzeuginnenraum mit einer Heiz- und/oder Klimaanlage nach einem der Ansprüche 1 bis 5,
**dadurch gekennzeichnet,**
**dass** die Lufteinlassöffnungen (31, 32) und Luftauslassöffnungen (41, 42) einander paarweise zugeordnet sind, so dass eine Lufteinlassöffnung eine ihr zugeordnete Luftauslassöffnung aufweist.

7. Fahrzeuginnenraum mit einer Heiz- und/oder Klimaanlage nach einem der Ansprüche 1 bis 5,
**dadurch gekennzeichnet,**
**dass** die Lufteinlassöffnungen (31, 32) und Luftauslassöffnungen (41, 42) einander so zugeordnet sind, dass eine Lufteinlassöffnung zwei zugeordnete Luftauslassöffnungen aufweist.

8. Fahrzeuginnenraum mit einer Heiz- und/oder Klimaanlage nach einem der Ansprüche 1 bis 7,
**dadurch gekennzeichnet,**
**dass** die Lufteinlassöffnungen (31, 32) eine rechteckige Einlassfläche und die Luftauslassöffnungen (41, 42) eine rechteckige Auslassfläche mit jeweils einer kurzen Quererstreckung und einer langen Längserstreckung aufweisen.

9. Fahrzeuginnenraum mit einer Heiz- und/oder Klimaanlage nach einem der Ansprüche 1 bis 8,
**dadurch gekennzeichnet,**
**dass** eine Lufteinlassöffnung, vorzugsweise Außenlufteinlassöffnung (31) im Bereich einer Scheibe , vorzugsweise Frontscheibe angeordnet ist und die zugeordnete Luftauslassöffnung, vorzugsweise Außenluftauslassöffnung (41) an einer gegenüberliegenden Scheibe vorzugsweise Heckscheibe angeordnet ist, so dass der geschlossene Strömungsverlauf, vorzugsweise Außenluftströmungsverlauf entlang der Scheiben und des Fahrzeugdaches geführt ist.

10. Fahrzeuginnenraum mit einer Heiz- und/oder Klimaanlage nach einem der Ansprüche 1 bis 9,
**dadurch gekennzeichnet,**
**dass** eine Lufteinlassöffnung, vorzugsweise Außenlufteinlassöffnung (31) an einem Ende einer Scheibe und die zugeordnete Luftauslassöffnung, vorzugsweise Außenluftauslassöffnung (41) an dem gegenüberliegenden Ende der Scheibe angeordnet ist, so dass der geschlossene Strömungsverlauf, vorzugsweise Außenluftströmungsverlauf entlang der Scheibe geführt ist.

11. Fahrzeuginnenraum mit einer Heiz- und/oder Klimaanlage nach einem der Ansprüche 1 bis 10,
**dadurch gekennzeichnet,**
**dass** mehrere Einheiten (5), bestehend aus einer Umlufteinlassöffnung (32) und einer dieser zugeordneten Umluftauslassöffnung (42), so im Fußraum des Fahrzeugs verteilt angeordnet sind, dass im Fußraum des Fahrers (82) und/oder des Beifahrers (83) und/oder im Fond-Fußraum (86) jeweils eine Einheit (5) oder mehrere dieser Einheiten angeordnet ist bzw. sind und vorzugsweise vorgesehen ist, dass die Längserstreckung der Umlufteinlass- bzw. Umluftauslassflächen in Fahrzeugquerrichtung verlaufen.

12. Fahrzeuginnenraum mit einer Heiz- und/oder Klimaanlage nach Anspruch 11,
**dadurch gekennzeichnet,**
**dass** die Einheit (5) bzw. Einheiten so im Fußraum angeordnet und/oder ausgebildet ist bzw. sind, dass der geschlossene Strömungsverlauf, vorzugsweise Umluftströmungsverlauf Walzenform aufweist, wobei die Achse der Walze quer zur Fahrtrichtung ausgerichtet ist.

13. Fahrzeuginnenraum mit einer Heiz- und/oder Klimaanlage nach einem der Ansprüche 1 bis 12,
**dadurch gekennzeichnet,**
**dass** eine Umluftauslassöffnung (42) über einen eigenen, von der zentralen Luftkonditionier- und/oder Luftfördervorrichtung (2) separat ausgebildeten lokalen Luftrückführkanal (53) mit der zugeordneten Umlufteinlassöffnung (32) verbunden ist.

14. Fahrzeuginnenraum mit einer Heiz- und/oder Klimaanlage nach Anspruch 13,
**dadurch gekennzeichnet,**
**dass** der lokale Luftrückführkanal (53) ein, vorzugsweise von der zentralen Luftkonditionier- und/oder Luftfördervorrichtung (2) unabhängig und/oder abhängig steuerbares lokales Luftförderaggregat (6) aufweist.

## Claims

1. Vehicle interior with a heating and/or air-conditioning system with a central air-conditioning and/or air-conveying device for heating and/or cooling and/or drying and/or humidifying and/or cleaning and/or conveying air and several air inlet and air outlet orifices distributed about the vehicle interior, whereby differently conditioned air can be introduced into the vehicle interior simultaneously in an adjacent disposition and the differently conditioned air is prevented from inter-mixing due to the fact that the air inlet orifices (31, 32) and the air outlet orifices (41, 42) co-operate with one another so that the majority of the air introduced into the vehicle interior (8) through an air inlet orifice (31) is fed away through the co-operating air outlet orifice (41), **characterised in that** an air inlet orifice or several air inlet orifices is or are designed as an outside air inlet orifice (31) or outside air inlet orifices and convey(s) only outside air into the vehicle interior (8) and the co-operating air outlet orifice or the co-operating air outlet orifices are designed as an outside air outlet orifice (41) or outside air outlet orifices and convey(s) only the majority of outside air out of the vehicle interior (8), and an air inlet orifice or several air inlet orifices is or are designed as an ambient air inlet orifice (32) or ambient air inlet orifices and convey(s0 only ambient air into the vehicle interior (8) and the co-operating air outlet orifice or the co-operating air outlet orifices is or are designed as an ambient air outlet orifice (42) or ambient air outlet orifices and convey(s) only the majority of ambient air out of the vehicle interior (8).

2. Vehicle interior with a heating and/or airconditioning system as claimed in claim 1,
**characterised in that**
an air inlet orifice or several air inlet orifices is or are designed to be switchable so that it or they can be switched between an outside air inlet orifice (31) and ambient air inlet orifice (32).

3. Vehicle interior with a heating and/or air-conditioning system as claimed in claim 1 or 2,
**characterised in that**
an air outlet orifice or several air outlet orifices is or are designed to be switchable so that it or they can be switched between an outside air outlet orifice (41) and ambient air outlet orifice (42).

4. Vehicle interior with a heating and/or air-conditioning system as claimed in one of claims 1 to 3,
**characterised in that**
the mutually co-operating air inlet orifices (32) and air outlet orifices (42) are designed and/or controllable so that the air introduced into the vehicle interior (8) via an air inlet orifice forms a closed flow pattern which is directed from an air inlet orifice towards the air outlet orifice co-operating with it.

5. Vehicle interior with a heating and/or air-conditioning system as claimed in one of claims 1 to 4,
**characterised in that**
the mutually co-operating air inlet orifices (31, 32) and air outlet orifices (41, 42) are so disposed in the vehicle interior (8) that existing surfaces in the vehicle interior, preferably windows and/or bodywork surfaces and/or seat surfaces, can be used as guide surfaces for the flow pattern between the air inlet orifices (31, 32) and the co-operating air outlet orifices (41, 42).

6. Vehicle interior with a heating and/or air-conditioning system as claimed in one of claims 1 to 5,
**characterised in that**
the air inlet orifices (31, 32) and air outlet orifices (41, 42) co-operate with one another in pairs so that an air inlet orifice has an air outlet orifice co-operating with it.

7. Vehicle interior with a heating and/or air-conditioning system as claimed in one of claims 1 to 5,
**characterised in that**
the air inlet orifices (31, 32) and air outlet orifices (41, 42) co-operate with one another in such a way that one air inlet orifice has two co-operating air outlet orifices.

8. Vehicle interior with a heating and/or air-conditioning system as claimed in one of claims 1 to 7,
**characterised in that**
the air inlet orifices (31, 32) have a rectangular inlet surface and the air outlet orifices (41, 42) have a rectangular outlet surface with a short transverse extension and a long longitudinal extension in each case.

9. Vehicle interior with a heating and/or air-conditioning system as claimed in one of claims 1 to 8,
**characterised in that**
an air inlet orifice, preferably an outside air inlet orifice (31), is disposed in the region of a window, preferably the front windscreen, and the co-operating air outlet orifice, preferably an outside air outlet orifice (41), is disposed adjacent to an oppositely lying window, preferably the rear window, so that the closed flow pattern, preferably the outside air flow pattern, is directed along the windows and the vehicle roof.

10. Vehicle interior with a heating and/or air-conditioning system as claimed in one of claims 1 to 9,
**characterised in that**
an air inlet orifice, preferably an outside air inlet orifice (31), is disposed at one end of a window and the co-operating air outlet orifice, preferably an outside air outlet orifice (41), is disposed at the oppositely lying end of the window so that the closed flow pattern, preferably the outside air flow pattern, is directed along the window.

11. Vehicle interior with a heating and/or air-conditioning system as claimed in one of claims 1 to 10,
**characterised in that**
several units (5) consisting of an ambient air inlet orifice (32) and an ambient air outlet orifice (42) co-operating with it are distributed in the foot well of the vehicle in such a way that a respective unit (5) or several of these units is or are disposed in the foot well of the driver (82) and/or the passenger (83) and/or in the rear foot well (86) and the longitudinal extension of the ambient air inlet and ambient air outlet surfaces preferably extends in the vehicle transverse direction.

12. Vehicle interior with a heating and/or air-conditioning system as claimed in claim 11,
**characterised in that**
the unit (5) or units is or are disposed and/or designed so that the closed flow pattern, preferably the ambient air flow pattern, assumes a roller shape with the axis of the roller disposed transversely to the direction of travel.

13. Vehicle interior with a heating and/or air-conditioning system as claimed in one of claims 1 to 12,
**characterised in that**
an ambient air outlet orifice (42) is connected to the co-operating ambient air inlet orifice (32) via a separate local air return passage (53) provided separately from the central air conditioning and/or air conveyor system (2).

14. Vehicle interior with a heating and/or air-conditioning system as claimed in claim 13,
**characterised in that** the local air return passage (53) has a local air conveyor unit (6) which can preferably be controlled separately from and/or jointly with the central air conditioning and/or air conveyor system (2).

## Revendications

1. Habitacle de véhicule comprenant une installation de chauffage et/ou de climatisation avec un dispositif central de conditionnement d'air et/ou de transport d'air pour la mise à température et/ou le refroidissement et/ou le séchage et/ou l'humidification et/ou le nettoyage et/ou le transport d'air et plusieurs ouvertures d'entrée et de sortie d'air disposées et réparties dans l'habitacle du véhicule, de l'air conditionné de façon différente pouvant être amené en même temps de façon juxtaposée dans l'habitacle du véhicule, moyennant quoi
on évite un mélange de l'air conditionné différemment du fait que les ouvertures d'entrée d'air (31, 32) et les ouvertures de sortie d'air (41, 42) sont attribuées les unes aux autres de telle sorte que l'air introduit par une ouverture d'entrée d'air (31) dans l'habitacle du véhicule (8) est évacué en majeure partie par l'ouverture de sortie d'air (41) attribuée,
**caractérisé en ce que**
une ouverture d'entrée d'air ou plusieurs ouvertures d'entrée d'air sont réalisées comme ouverture d'entrée d'air extérieur (31) ou ouvertures d'entrée d'air extérieur du fait qu'elle(s) ne laisse(nt) entrer que de l'air extérieur dans l'habitacle du véhicule (8) et l'ouverture ou les ouvertures de sortie d'air attribuée(s) est ou sont conçue(s) comme ouverture (41) ou ouvertures de sortie d'air extérieur du fait qu'elle(s) n'évacue(nt) en majeure partie que de l'air extérieur de l'habitacle du véhicule (8), et
**en ce qu'**une ouverture ou plusieurs ouvertures d'entrée d'air sont conçues comme ouverture (32) ou ouvertures d'entrée d'air ambiant du fait qu'elle(s) ne laisse(nt) entrer que de l'air ambiant dans l'habitacle du véhicule (8) et l'ouverture ou les ouvertures de sortie d'air attribuée(s) est ou sont conçue(s) comme ouverture (42) ou ouvertures de sortie d'air ambiant du fait qu'elle(s) ne laisse(nt) sortir en majeure partie que de l'air ambiant de l'habitacle du véhicule (8).

2. Habitacle de véhicule comprenant une installation de chauffage et/ou de climatisation selon la revendication 1,
**caractérisé en ce que**
une ouverture ou plusieurs ouvertures d'entrée d'air est ou sont conçue(s) de façon réversible, de telle sorte qu'elle(s) est ou sont réversible(s) entre l'ouverture d'entrée d'air extérieur (31) et l'ouverture d'entrée d'air ambiant (32).

3. Habitacle de véhicule comprenant une installation de chauffage et/ou de climatisation selon la revendication 1 ou 2,
**caractérisé en ce que**
une ouverture ou plusieurs ouvertures de sortie d'air est ou sont réalisée(s) de façon réversible, de telle sorte qu'elle(s) est ou sont réversible(s) entre l'ouverture de sortie d'air extérieur (41) et l'ouverture de sortie d'air ambiant (42).

4. Habitacle de véhicule comprenant une installation de chauffage et/ou de climatisation selon l'une quelconque des revendications 1 à 3,
**caractérisé en ce que**
les ouvertures d'entrée d'air (32) et ouvertures de sortie d'air (42) attribuées les unes aux autres sont conçues et/ou contrôlables de telle sorte que l'air introduit par une ouverture d'entrée d'air forme dans l'habitacle du véhicule (8) un tracé d'écoulement fermé qui part d'une ouverture d'entrée d'air et est dirigé vers l'ouverture de sortie d'air attribuée à celle-ci.

5. Habitacle de véhicule comprenant une installation de chauffage et/ou de climatisation selon l'une quelconque des revendications 1 à 4,
**caractérisé en ce que**
les ouvertures d'entrée d'air (31, 32) et les ouvertures de sortie d'air (41, 42) attribuées les unes aux autres sont disposées dans l'habitacle du véhicule (8) de telle sorte que des surfaces présentes dans l'habitacle du véhicule, de préférence des vitres et/ou des surfaces de carrosserie et/ou des surfaces de siège, peuvent être utilisées comme des surfaces de guidage pour le tracé d'écoulement entre les ouvertures d'entrée d'air (31, 32) et les ouvertures de sortie d'air (41, 42) attribuées.

6. Habitacle de véhicule comprenant une installation chauffage et/ou de climatisation selon l'une quelconque des revendications 1 à 5,
**caractérisé en ce que**
les ouvertures d'entrée d'air (31, 32) et les ouvertures de sortie d'air (41, 42) sont attribuées réciproquement par paires, de sorte qu'une ouverture d'entrée d'air présente une ouverture de sortie d'air qui lui est attribuée.

7. Habitacle de véhicule comprenant une installation de chauffage et/ou de climatisation selon l'une quelconque des revendications 1 à 5,
**caractérisé en ce que**
les ouvertures d'entrée d'air (31, 32) et les ouvertures de sortie d'air (41, 42) sont attribuées les unes aux autres de telle sorte qu'une ouverture d'entrée d'air présente deux ouvertures de sortie d'air attribuées.

8. Habitacle de véhicule comprenant une installation de chauffage et/ou de climatisation selon l'une quelconque des revendications 1 à 7,
**caractérisé en ce que**
les ouvertures d'entrée d'air (31, 32) présentent une surface d'entrée rectangulaire et les ouvertures de sortie d'air (41, 42) une surface de sortie rectangulaire comprenant respectivement un étirement transversal court et un étirement longitudinal long.

9. Habitacle de véhicule comprenant une installation de chauffage et/ou de climatisation selon l'une quelconque des revendications 1 à 8,
**caractérisé en ce que**
une ouverture d'entrée d'air, de préférence une ouverture d'entrée d'air extérieur (31) est disposée dans la zone d'une vitre, de préférence une vitre avant et la sortie d'ouverture d'air attribuée, de préférence l'ouverture de sortie d'air extérieur (41) est disposée sur une vitre opposée, de préférence une lunette arrière, de telle sorte que le tracé d'écoulement est fermé, de préférence le tracé d'écoulement d'air extérieur, est guidé le long des vitres et du toit du véhicule.

10. Habitacle du véhicule comprenant une installation de chauffage et/ou de climatisation selon l'une quelconque des revendications 1 à 9,
**caractérisé en ce que**
une ouverture d'entrée d'air, de préférence une ouverture d'entrée d'air extérieur (31), est disposée sur une extrémité d'une vitre et l'ouverture de sortie d'air attribuée, de préférence l'ouverture de sortie d'air extérieur (41), est disposée sur l'extrémité opposée de la vitre, de sorte que le tracé d'écoulement fermé, de préférence le tracé d'écoulement d'air extérieur, est guidé le long de la vitre.

11. Habitacle de véhicule comprenant une installation de chauffage et/ou de climatisation selon l'une quelconque des revendications 1 à 10,
**caractérisé en ce que**
plusieurs unités (5), comprenant une ouverture d'entrée d'air ambiant (32) et/ou une ouverture de sortie d'air ambiant (42) attribuée à celle-ci, sont disposées et réparties dans l'espace pour les pieds du véhicule de telle sorte que respectivement une unité (5) ou plusieurs de ces unités est ou sont répartie(s) dans l'espace pour les pieds du conducteur (82) et/ou du passager avant (43) et/ou dans l'espace pour les pieds à l'arrière (86) et il est prévu de préférence qu'un étirement longitudinal des surfaces d'entrée d'air ambiant ou des surfaces de sortie d'air ambiant sont agencées dans le sens transversal du véhicule.

12. Habitacle de véhicule comprenant une installation de chauffage et/ou de climatisation selon la revendication 11,
**caractérisé en ce que**
l'unité (5) ou les unités est ou sont disposée(s) et/ou réalisée(s) dans l'espace pour les pieds de telle sorte que le tracé d'écoulement fermé, de préférence le tracé d'écoulement d'air ambiant, présente une forme de cylindre, l'axe du cylindre étant orienté transversalement au sens de marche.

13. Habitacle de véhicule comprenant une surface de chauffage et/ou de climatisation selon l'une quelconque des revendications 1 à 12,
**caractérisé en ce que**
une ouverture de sortie d'air ambiant (42) est reliée par un conduit de recyclage d'air (53) propre, local, conçu séparément du dispositif central de conditionnement d'air et/ou de transport d'air (2) à l'ouverture d'entrée d'air ambiant (32) attribuée.

14. Habitacle de véhicule comprenant une installation de chauffage et/ou de climatisation selon la revendication 13,
**caractérisé en ce que**
le conduit local de recyclage d'air (53) présente un ensemble de transport d'air (6) local, contrôlable de préférence de façon indépendante et/ou dépendante du dispositif central de conditionnement d'air et/ou du dispositif central de transport d'air (2).
